# EUROPEAN PATENT SPECIFICATION

(11) **EP 1 570 803 B1**
(45) Date of publication and mention of the grant of the patent: **05.12.2018**
(21) Application number: 04254358.7
(22) Date of filing: 21.07.2004
(51) Int. Cl.: A61C 7/14

(54) **Systems and methods for fabricating a dental template**
Systeme und Verfahren zur Herstellung einer dentalen Schablone
Systèmes et procédés pour la fabrication d'un gabarit dentaire

(30) Priority: 04.03.2004 US 794324; 04.03.2004 US 794325
(43) Date of publication of application: 07.09.2005
(60) Divisional application: 10179634.0
(73) Proprietor: Align Technology, Inc., San Jose, CA 95134 (US)
(72) Inventor: Knopp, Peter G., Palo Alto, CA 94306 (US); Abolfathi, Amir, Menlo Park, CA 94025 (US); Kuo, Eric, Foster City, CA 94404 (US); Phan, Loc X, San Jose, CA 95148 (US); Wen, Huafeng, Redwood Shores, CA 94065 (US)
(74) Representative: Clark, Jane Anne

(56) References cited:
- US-A- 5 791 896
- US-A- 5 971 754
- US-A1- 2003 027 098
- US-A1- 2003 194 677
- US-A1- 2003 224 316

## Description

### BACKGROUND

The present invention relates generally to the field of orthodontics.

One objective in orthodontics is to move a patient's teeth to a position where the teeth function optimally and are also aesthetically pleasing. Conventional appliances such as braces and wires can be positioned on a patient's teeth by a treatment provider such as an orthodontist or a suitably trained dentist. Once mounted on the teeth, the hardware exerts continual forces on the teeth and gradually urges the teeth toward their ideal positions. Over a period of time, the treatment provider adjusts the braces and the wires to move the teeth toward their final destination.

Orthodontic brackets are often bonded directly to the patient's teeth. Typically, a small quantity of adhesive is placed on the base of each bracket and the bracket is then placed on a selected tooth. Before the adhesive is set, the bracket is maneuvered to a desired location on the tooth. Once the adhesive has hardened, the bracket is bonded to the tooth with sufficient strength to withstand subsequent orthodontic forces as treatment progresses. One shortcoming with this technique is the difficulty in accessing the optimal surface for bracket placement on severely crowded teeth or in teeth where the bonding surface is obstructed by teeth in the opposing arch during jaw closure. With posterior teeth, the treatment provider may have difficulty seeing the precise position of the bracket relative to the tooth surface. The amount of time needed to carry out the bonding procedure may be a nuisance both to the patient as well as to the treatment provider. Also, the necessity of minimizing moisture contamination from the patient's saliva can prolong the procedure and also unduly impair the accuracy of placement of the brackets on the teeth. All of these factors increase the chance that the ultimate adhesive bond will not have sufficient strength to retain the brackets on the teeth during treatment. One way to overcome some of the limitations of direct bracket placement is with indirect bonding. Typically, an impression of each of the patient's dental arches is taken and a replica plaster or "stone" model is made from each impression and sealed. Brackets are bonded to the sealed stone models using a temporary cement. A transfer tray is then made by placing matrix material over both the model and the brackets on the model. For example, a heated plastic sheet matrix material may be placed over the model and brackets and then under pressure. The plastic sheet material then assumes a configuration that precisely matches the shape of the replica teeth of the stone model with the brackets in the desired position. The plastic material is then allowed to cool and harden to form a tray. The temporary adhesive is removed, and permanent adhesive is placed on the base of each bracket in the tray, and the tray with the embedded brackets then placed over matching portions of the patient's dental arches. Since the configuration of the interior surface of the tray closely matches the respective portions of the patient's dental arches, each bracket is ultimately positioned on the patient's teeth at precisely the same location that corresponds to the previous location of the same bracket on the stone model. The adhesive is hardened and the matrix material removed, leaving the brackets in the desired positions. This method however, is labor intensive. An additional problem with the indirect method is that brackets may become dislodged during the removal of the matrix from the dental arches. The problem of proper access to tooth surfaces for optimal placement in the event of severely
crooked teeth or teeth which interfere with the opposing arch such that brackets cannot be placed is also not addressed.

New methods such as those described in U.S. Patent 5,975,893, commonly assigned to the assignee of the instant invention, allow the treatment to be planned in advance and a plurality of polymeric shell appliances are fabricated at the outset of treatment. The use of polymeric shell appliances provides treatments that are more comfortable; less visible, and removable by the patient, and greatly improves patient compliance, comfort, and satisfaction.

Since each patient is unique and requires customized treatment, on occasion, a patient may need to utilize a combination of braces/wires and shell appliances. Ideally, a device would enable precise placement of brackets on teeth with minimal risk of displacing the brackets upon removal of the matrix and allow final placement to be independent of adjacent geometries. In other words, placement of obscured tooth surfaces may be accomplished at a later time when the tooth surfaces have been exposed through initial uncrowding of severely overlapped teeth.

US 2003/0194677 describes a method and apparatus for generating an orthodontic template that assists in placement of an orthodontic apparatus. A digital model of an orthodontic structure of a patient is obtained and one of a plurality of orthodontic apparatus is selected for the orthodontic structure. A digital model of the placement of the selected orthodontic apparatus on the digital model of the orthodontic structure is produced and a digital image of a tooth mounting apparatus is then retrieved for a given tooth. An orthodontic template for holding a physical embodiment of the tooth mounting apparatus is then produced, based on the digital image of the tooth mounting apparatus, the digital model of the placement and at least a portion of the digital model of the orthodontic structure.

In one aspect, the present invention provides a method as set out in claim 1.

In another aspect, the present invention provides a computer program product as set out in claim 18.

In another aspect, the present invention provides an apparatus as set out in claim 21.

In an embodiment, a dental template is provided to support positioning an object on a patient's tooth oriented in such a way that all the objects as a whole are lined up to a user defined ideal arrangement. In an embodiment, a method for fabricating the template includes digitizing the patient's teeth; adding virtual objects to predetermined locations on the digitized teeth; and fabricating the dental template to locate the object on the patient's teeth. The dental template is designed to locate each object at a predetermined inclination or a predetermined angulation on the patient's tooth. The template can be used for etching or for positioning brackets on teeth.

In an embodiment, systems and methods are provided for fabricating a dental template to position an object on a patient's tooth to move the tooth from an initial position to a target position are disclosed. The system digitizes a model of the patient's tooth at the initial position; places an object on the tooth model at the target position; determines the position of the object at the initial position; and fabricates the dental template to locate the object on the patient's tooth.

In an embodiment, a method to position a bracket on a patient's tooth includes digitizing the patient's tooth at an initial tooth position; determining a final position for the tooth; placing the bracket on the final tooth position; determining the position of the bracket on the initial tooth position based on the bracket position on the final tooth position; and fabricating a dental appliance to mount the bracket on the patient's tooth.

Implementations of the above aspects may include one or more of the following. The object can be a bracket and the bracket is positioned in its slot to receive an orthodontic wire. The method may include positioning a plurality of brackets on the patient's teeth at the target position, each bracket having a slot adapted to receive an orthodontic wire passing therethrough; and aligning the brackets to minimize strain on the wire at the target position. The wire at the target position may be arch-shaped and the wire at the initial position may be irregular. The method may include interactively adjusting the position of the object. The method may also include determining a deviation of the object from an ideal placement and iteratively adjusting the position of the object to minimize the deviation. The fabricating may include rendering a physical dental template using a rapid prototyping method. The object can be embedded in the dental template or can be inserted into an opening on the dental template prior to being bonded on the tooth. The template may be articulable with a plurality of flexibly linked cavities. The template can be used for treating teeth using a combination of removable and fixed appliances. The fixed appliance may cover two or more teeth on an arch (portion of arch) or the entire arch. The fixed appliance can also be positioned on a lingual side of the patient's teeth.

In an embodiment, an apparatus to fabricate a dental template to position an object on a patient's tooth to move the tooth from an initial position to a target position includes a scanner to digitize a model of the patient's tooth at the initial position; means for placing an object on the tooth model at the target position; means for determining the position of the object at the initial position; and a machine to fabricate the dental template to locate the object on the patient's tooth.

Implementations of the above aspect may include one or more of the following. The machine can be a rapid prototyping machine. The apparatus can include means for determining a deviation of the object from an ideal placement and iteratively adjusting the position of the object to minimize the deviation.

Advantages of the template may include one or more of the following. The template can be used for etching or for positioning brackets on teeth. The treatment can be done virtually and the placement of the brackets can be done using a template device that is a removable guide. This device allows precise placement of the bracket and enables bracket placement onto specific teeth independent of overall arch geometry. The template makes it easier for a less well-trained or an untrained person to bond a bracket. The system minimizes variations in the perception of distance and angles. The template provides a very precise control on the placement of the bracket. Since bracket placement is one of the critical variables to successful treatment, the template improves treatment precision from patient to patient and from tooth to tooth.

Other advantages of the template may include one or more of the following. The methods, steps, and algorithms described above that are used to form the requisite digital representation of an orthodontic template. Additional features, bodies, or component data files can be used in addition to the tooth files used to form said template. The elements, or concepts of the creation methods described above can be mixed or matched. That is, a file may also be created by using some steps from one method and other steps from one or more other methods.

Other advantages of the template may include one or more of the following. The template can be used for etching or for positioning brackets on teeth. The template allows standardized brackets to be accurately positioned on teeth regardless of tooth surface variations from the norm that the bracket base is designed for. The treatment can be done virtually and the placement of the brackets can be done using a template device that is a removable guide. This device allows precise placement of the bracket and enables bracket placement onto specific teeth independent of overall arch geometry. The template makes it easier for a less well-trained or an untrained person to bond a bracket. The system minimizes variations in the perception of distance and angles. The template provides a very precise control on the placement of the bracket. Since bracket placement is one of the critical variables to successful treatment, the template improves treatment precision from patient to patient and from tooth to tooth.

The device itself may not necessarily contain the bracket as with traditional indirect bonding (IDB) templates, but rather, directs the user as to the precise location where the bracket should be placed based on geometric fit.

### BRIEF DESCRIPTION OF THE DRAWINGS

Fig. 1 shows an exemplary method or process to fabricate a dental template to position an object on a patient's tooth.
Fig. 2A shows an exemplary method or process for placing an orthodontic object on a patient's tooth.
Fig. 2B shows a second method of placing the orthodontic object on a patient's tooth.
Fig. 3A illustrates an exemplary process for fabricating the dental template.
Fig. 3B shows a process for providing four possible templates.
Figs. 4A-4D show perspective views of various templates.
Figs. 5A and 5B illustrate two embodiments of articulated templates.
Fig. 6A illustrates a process of fabricating a dental template to position an object on a patient's tooth to move the tooth from an initial position to a target position.
Fig. 6B shows an example of brackets positioned on teeth at their final positions.
Fig. 6C shows an exemplary user interface that allows a user to visualize teeth at each treatment stage.
Fig. 6D shows the exemplary brackets when backtracked into their initial positions.
Fig. 7 is a diagram of a process to attach an object on a tooth.
Fig. 8 is a diagram of a process to fit wire on the teeth.
Fig. 9 is a diagram illustrating the marking of a wire for attachment placement.
Fig. 10 is a diagram illustrating attachment mounting using the dental template.
Figs. 11A-11C show one embodiment that enables controlled placement of the bracket base on a tooth.
Figs. 12A-12B show other embodiments to position the orthodontic object to the tooth with a desired angulation and/or inclination.
Fig. 13 is an exemplary flow-chart of a process to position the orthodontic object in an arbitrary 3D position with predetermined angulation and/or inclination.
Figs. 14-46 show various embodiments of digitally defining and forming dental templates.

### DESCRIPTION

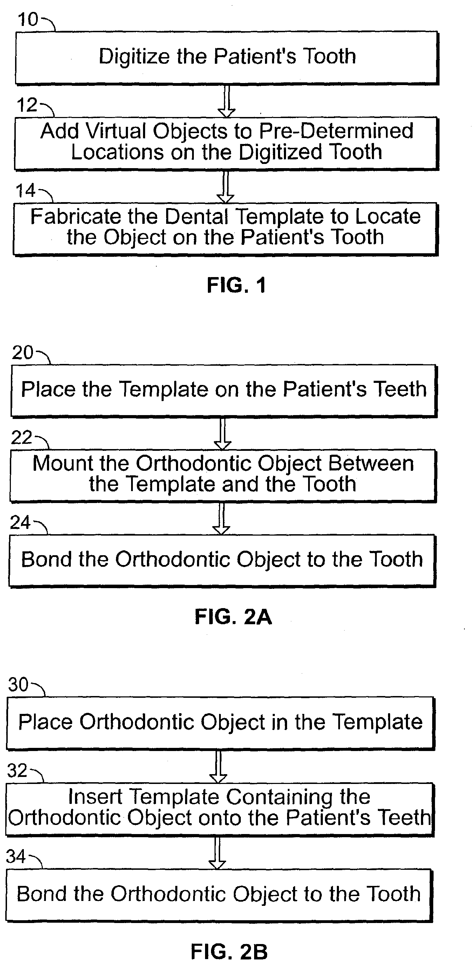

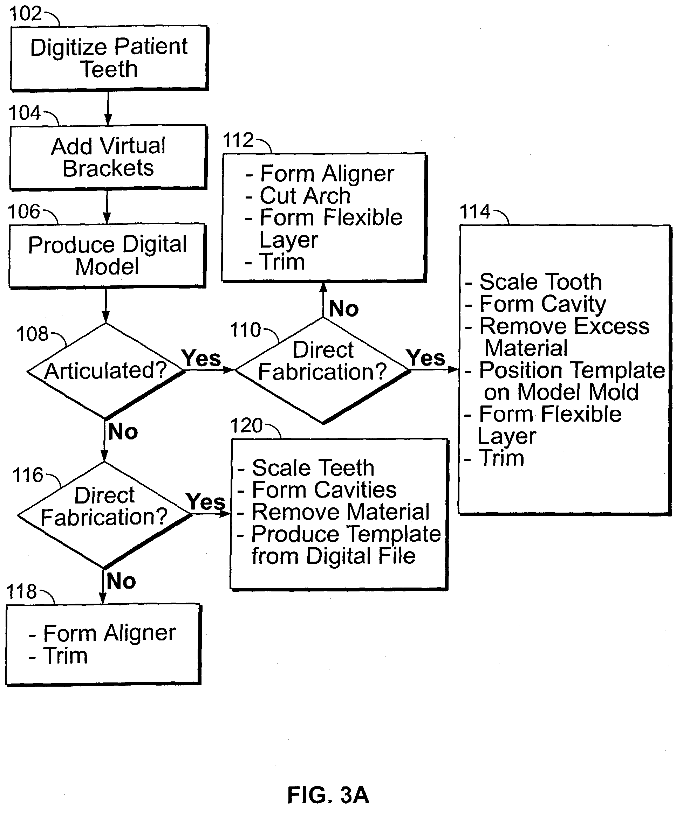

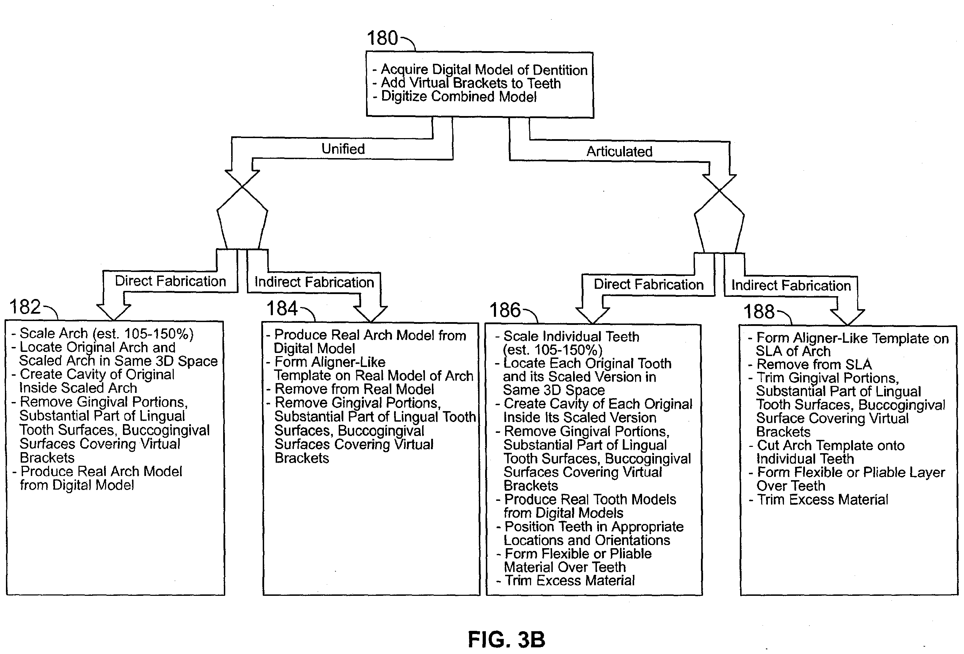

Fig. 1 shows an exemplary method or process to fabricate a dental template to position an object on a patient's tooth. First, the process digitizes the patient's tooth (10). Next, virtual objects are added to pre-determined locations on the digitized tooth (12). Finally, the process fabricates the dental template to locate the object on the patient's tooth (14). One detailed implementation of Fig. 1 is described in Figs. 3A and 3B below.

Fig. 2A shows an exemplary method or process for placing an orthodontic object on a patient's tooth. The process uses the template fabricated in the process of Fig. 1. The process includes placing the template on the patient's teeth (20); mounting the orthodontic object between the template and the tooth (22); and bonding the orthodontic object to the tooth (24). In the bonding operation, chemical curing or light curing adhesives can be used. In chemical curing, separately supplied curing components are mixed together and a small quantity of the mixture is placed on the back of the bracket prior to placing the bracket on the tooth. Light-curable adhesives include a photo-initiator that initiates the curing reaction once the adhesive is exposed to a sufficient amount of light. A common method of using light-curable adhesives for direct bonding includes the steps of placing a small quantity of the adhesive on the base of the bracket and then placing the bracket on the patient's tooth. The practitioner then shifts the bracket on the tooth as may be needed. Once the bracket is in its precise, intended location, light from a dental curing unit is directed toward the adhesive for a time period sufficient to satisfactorily cure the adhesive.

Fig. 2B shows a second method of placing the orthodontic object on a patient's tooth. In this process, the orthodontic object is placed in the template (30). Next, the process includes inserting the template containing the orthodontic object onto the patient's teeth (32). Finally, the process includes bonding the orthodontic object to the tooth (34).

Fig. 3A illustrates an exemplary process for fabricating the dental template. First, a digital model of a patient's teeth of a patient is obtained (102). The digital model can be obtained in a variety of ways. For example, the patient's teeth may be scanned or imaged using well known technology, such as X-rays, three-dimensional x-rays, computer-aided tomographic images or data sets, magnetic resonance images, etc. There are a variety of range acquisition systems, generally categorized by whether the process of acquisition requires contact with the three dimensional object. A contact-type range acquisition system utilizes a probe, having multiple degrees of translational and/or rotational freedom. By recording the physical displacement of the probe as it is drawn across the sample surface, a computer-readable representation of the sample object is made. A non-contact-type range acquisition device can be either a reflective-type or transmissive-type system. There are a variety of reflective systems in use. Some of these reflective systems utilize non-optical incident energy sources such as microwave radar or sonar. Others utilize optical energy. Those non-contact-type systems working by reflected optical energy further contain special instrumentation configured to permit certain measuring techniques to be performed (e.g., imaging radar, triangulation and interferometry).

Next, virtual brackets are selected (104). The virtual brackets are 3D models of existing brackets. The 3D models may be a computer aided design (CAD) model or may be scanned using scanners described above. The brackets may be positioned on a digitized tooth using a computer or workstation having a suitable graphical user interface (GUI) and software appropriate for viewing and modifying the images. The above-described component identification and component manipulation software is designed to operate at sophistication commensurate with the operator's training level. For example, the component manipulation software can assist a computer operator, lacking orthodontic training, by providing feedback regarding permissible and forbidden manipulations of the teeth. On the other hand, an orthodontist, having greater skill in intra-oral physiology and teeth-moving dynamics, can simply use the component identification and manipulation software as a tool and disable or otherwise ignore the advice.

While the methods will rely on computer manipulation of digital data, the dental templates or appliance may be produced by non-computer-aided techniques. For example, plaster casts obtained as described above may be cut using knives, saws, or other cutting tools in order to permit repositioning of individual teeth within the casting. The disconnected teeth may then be held in place by soft wax or other malleable material, and a plurality of intermediate tooth arrangements can then be prepared using such a modified plaster casting of the patient's teeth. The different arrangements can be used to prepare the template using pressure and vacuum molding techniques. While such manual creation of the appliance systems of the present invention will generally be much less preferred, systems so produced will come within the scope of the present invention.

Using the CAD workstation, a combined digital model of the virtual brackets and the teeth is produced (106).

In one implementation, one of four template embodiments can be selected: Direct-Articulated, Indirect-Articulated, Direct-Unified, and Indirect-Unified, as discussed in more detail in Fig. 3B.

Once the template has been fabricated, in one embodiment, the system sets the template over the model of the patient's arches or otherwise positions the template in the approximate locations of their respective teeth. A thermoformed, cast, or otherwise formed layer of flexible material is deposited on the bodies. The layer makes intimate and relatively durable contact with the bodies of the templates. This may be accomplished, among other ways, by adding or subtracting geometries to the bodies to engage well with the material layer. This method could be performed either by a factory or in the orthodontist's office.

The system produces both the template bodies and the inter-tooth portion(s) at the same time and subsequently alter the stiffness of the various parts. One way of achieving this would be to produce the entire arch with a 3-D printer, mask the tooth bodies from the inter-tooth portions, and embed the tooth bodies with a rigidifying agent and the inter-tooth portions with an agent to create flexibility.

From 108, if an articulated template is to be produced, the process proceeds to 110 where, if a directly formed template is produced, the process proceeds to 114 where each tooth is scaled; a cavity is formed to enclose the tooth when the dental template or appliance is inserted over the patient's teeth. Next, unnecessary structures are removed from the digital model. The digital model is produced as a physical model. A flexible pliable layer is formed and the resulting combination is trimmed to allow proper fit and function.

Alternatively, from 110 if indirect forming is to be done, the process forms an aligner, and cuts and removes excess material (112).

From 108, if a non-articulated template is to be indirectly fabricated (116), an aligner is formed and trimmed (118). In the case of a directly formed non-articulated template (116), the process proceeds to 120 where each tooth in the arch is scaled; cavities are formed to enclose the teeth when the dental template or appliance is inserted over the patient's teeth. Next, unnecessary structures are removed from the digital model. The digital model is produced as a physical model.

Fig. 3B shows a process for providing four possible templates. First, the process acquires a digital model of dentition, adds virtual brackets to teeth, and creates a combined model (180). Next, one of four templates options can be selected. The first option is unified (or single piece) - direct fabrication option where the process scales the arch (est. 105-150%), locates original arch and scaled arch in same 3D space, creates cavity of original inside scaled arch, removes gingival portions, substantial part of lingual tooth surfaces, buccogingival surfaces covering virtual brackets, and produces real arch model from digital model (182).

In the second option (unified indirect fabrication), the process produces real arch model from digital model and forms a removable appliance (aligner) template on real model of arch. The template is removed from the real model, and the process then removes gingival portions, substantial part of lingual tooth surfaces, buccogingival surfaces covering virtual brackets (184).

In the third option (articulated direct fabrication), the process scales individual tooth (est. 105-150%), locates each original tooth and its scaled version in same 3D space, creates a cavity of each original inside its scaled version, removes gingival portions, substantial part of lingual tooth surfaces, buccogingival surfaces covering virtual brackets, produces real tooth models from digital models, positions teeth in appropriate locations and orientations, forms a flexible or pliable material over teeth, and trims excess material from the template (186).

In the fourth option (articulated indirect fabrication), the process forms an aligner-like template on a mold of an arch. The template is removed from the mold and gingival portions, substantial part of lingual tooth surfaces, and buccogingival surface covering virtual brackets are trimmed. The process cuts an arch template onto an individual tooth. A flexible or pliable layer over the template is formed, and excess material is trimmed (188).

In yet another embodiment, a process obtains tooth geometries. If direct fabrication is to be used, the process performs the following:
- Scale the teeth to values likely within the range 105-150%.
- Co-locate the original (100%) teeth and the scaled teeth in the same 3D space
- Place a virtual bracket or other appropriate geometry at a specific location and in a specific orientation on each tooth to be treated.
- Cavity the original teeth and the brackets in the scaled teeth.
- Remove from the resulting template or body those aspects that would be below the gingival line. Remove the portions of the resultant body buccal and gingival to the brackets remove a substantial portion or all of the lingual aspect of the resultant body.
- Convert this computer model to a real part, likely through the use of a rapid prototyping method (e.g. Fused Deposition Modeling, 3-D Printing, and stereolithography).

If indirect fabrication is to be done, the following operations are done using an arch model:
- Form an Aligner-like appliance or template over an arch model that has brackets or other appropriate geometries properly located on the teeth.
- Remove from the Aligner or template those aspects that would be below the gingival line or in direct interproximal contact with adjacent teeth. Remove the portions of the Aligner buccal and gingival to the bracket. Remove a substantial portion or all of the lingual aspect of the Aligner.
After completion, the process ships the templates, bodies or the completed appliance to the orthodontist either at the onset of treatment or when it is requested.

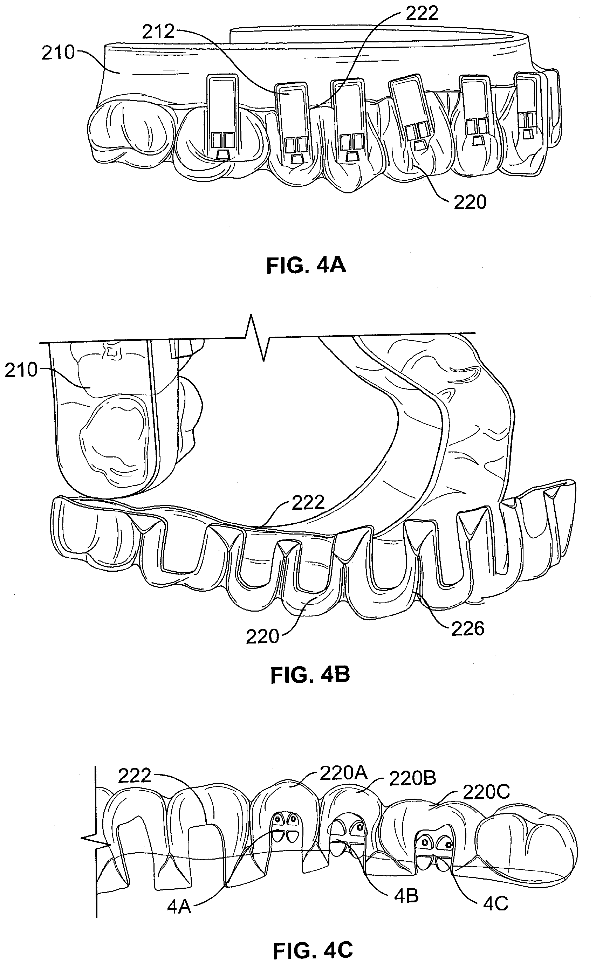

Figure 4A shows one embodiment of a dental template 220 or appliance formed over a mold 210. The template looks like a removable appliance; however, it has openings 222 or "port-holes" approximating the footprint, key portions of the footprint, and/or possibly other geometrical features of a bracket to guide the precise placement of the bracket on its respective tooth. The template 220 with the openings 222 or "port-holes" may also be a guide for enamel etching or adhesive placement.

The mold 210 is a physical rendition of a digital model that has been fabricated using rapid prototyping methods. A bump or projection 212 rises from the mold 210 so when the dental template or appliance is thermal-formed, an opening 222 is formed on the template 220. The opening 222 is where the template is cut out along the edge of the bump or projection 212. The opening 222 has a bracket support edge 226, whose operation is described in more detail in Fig. 4B. In addition to the support edge 226, the template 220 may have features that will minimize the retention of it on the dental anatomy. For example, the lingual side of the device may not have maximum coverage.

Fabrication methods for the mold 210 employ a rapid prototyping device such as a stereolithography machine or a fused deposition modeling machine. A suitable rapid prototyping machine is Model SLA-250/50 available from 3D System, Valencia, Calif. The rapid prototyping machine selectively hardens a liquid or other non-hardened resin into a three-dimensional structure, which can be separated from the remaining non-hardened resin, washed, and used either directly as the appliance or indirectly as a mold for producing the appliance. The prototyping machine receives the individual digital data sets and produces one structure corresponding to each of the desired appliances. Generally, because the stereolithography machine may utilize a resin having non-optimum mechanical properties and which may not be generally acceptable for patient use, the prototyping machine produces the mold 210. After the positive model is prepared, a conventional pressure or vacuum molding machine may be used to produce the appliances from a more suitable material, such as 0.03 inch thermal forming dental material, available from Tru-Tain Plastics, Rochester, Minn. 55902. Suitable pressure molding equipment is available under the trade name BIOSTAR from Great Lakes Orthodontics, Ltd., Tonawanda, N.Y. 14150. The molding machine produces each of the appliances directly from the positive tooth model and the desired material. Suitable vacuum molding machines are available from Raintree Essix, Inc.

In one embodiment, the template is made from a thick material (for example 0.03 inches or more) to provide the user with more guidance in the depth direction. Furthermore, the thick template allows easier lining the bracket to the tooth.

More information on the fabrication of the dental template or appliance is disclosed in USPN 6,499,997 "Manipulable dental model system for fabrication of a dental appliance"; USPN 6,497,574 "Modified tooth positioning appliances and methods and systems for their manufacture"; USPN 6,488,499 "Methods for correcting deviations in preplanned tooth rearrangements"; USPN 6,485,298 "System and method for releasing tooth positioning appliances"; USPN 6,471,511 "Defining tooth-moving appliances computationally"; USPN 6,463,344 "Efficient data representation of teeth model"; USPN 6,457,972 "System for determining final position of teeth"; USPN 6,454,565 "Systems and methods for varying elastic modulus appliances"; USPN 6,450,807 "System and method for positioning teeth"; USPN 6,409,504 "Manipulating a digital dentition model to form models of individual dentition components"; USPN 6,406,292 "System for determining final position of teeth"; USPN 6,398,548 "Method and system for incrementally moving teeth"; USPN 6,394,801 "Manipulable dental model system for fabrication of dental appliances"; USPN 6,390,812 "System and method for releasing tooth positioning appliances"; USPN 6,386,878 "Systems and methods for removing gingiva from teeth"; USPN 6,386,864 "Stress indicators for tooth positioning appliances"; USPN 6,371,761 "Flexible plane for separating teeth models"; USPN 6,318,994 "Tooth path treatment plan"; USPN 6,309,215 "Attachment devices and method for a dental appliance "; USPN 6,299,440 "System and method for producing tooth movement"; USPN 6,227,851 "Manipulable dental model system for fabrication of a dental appliance"; USPN 6,227,850 "Teeth viewing system"; USPN 6,217,325 "Method and system for incrementally moving teeth"; USPN 6,210,162 "Creating a positive mold of a patient's dentition for use in forming an orthodontic appliance"; and USPN 5,975,893 "Method and system for incrementally moving teeth".

Turning now to Fig. 4B, the template 220 is separated from the mold 210. The opening 222 allows a bracket base to fit into the opening 222. Bracket support edge 226 is needed to securely position the bracket in the template 220. In this embodiment, the bracket support edge 226 is curvaceous. If the edge 226 had been terminated as a simple flat edge, the bracket can be located in X and Y surfaces on the tooth, but the Z direction (buccal lingual direction) would not be controlled. The edge 226 provides the needed control of the bracket's degree of freedom in the Z direction to allow orientation of the bracket about any given axis. Those features allow the bracket to be secured in the proper position and orientation on its respective tooth. The edge 226 can change, depending on vendor-to-vendor or prescription-to-prescription.

Another embodiment of the template can be used for etching bonding chemicals on the patient's teeth. The etching template directs the user to predetermined locations on the teeth surfaces that need to be bonded. The etching template can be either the format of a windowed template or a concave surfaced template where bonding gel is loaded or preloaded into the concavity.

Fig. 4C shows a template wherein each of the openings, cut-outs, port-holes, or slots 222 in the template 220 are designed to fit particular brackets 4A, 4B and a 4C, each of which fits into its respective portion on the template.

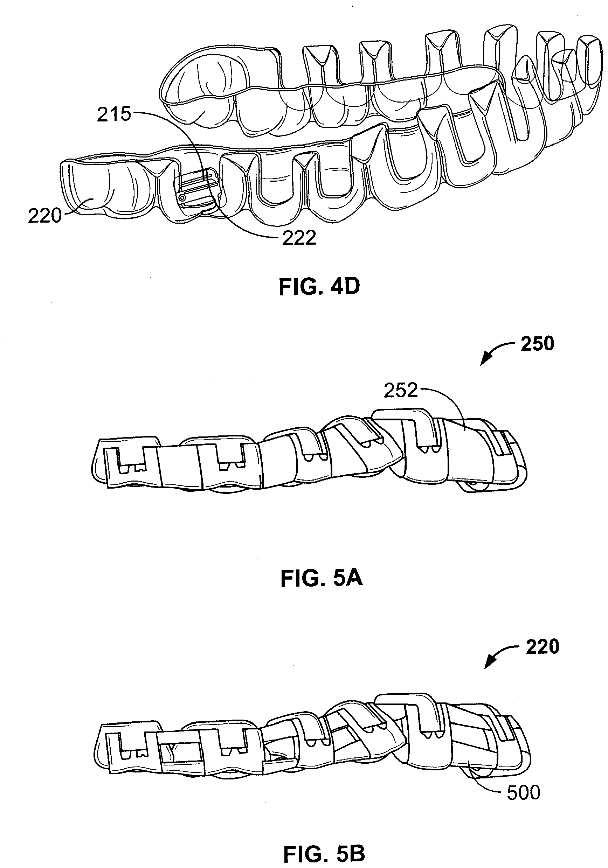

Fig. 4D shows that the system is not limited to bracket design or shape. In Fig. 4D, a molar tube bracket 215 can be placed on the opening 222. Hence, the template 220 is not limited to any specific bracket. Rather, any form of fixed orthodontic appliances placed on a tooth could be accommodated.

Figs. 5A and 5B illustrate two exemplary embodiments of articulated templates. Fig. 5A shows two segments joined at the interproximal regions of two adjacent teeth. A number of alternate methods to join the teeth can be used, including that the joining methods could be alternate or vary from one interproximal region to the next. Further, the joining method could also be a layer or layers that cover additional or different surfaces of the teeth as depicted in Fig. 5B.

In Fig. 5A, the template is made up of a number of movable template components 250. Each of the template components 250 can be mounted on a patient's tooth to facilitate bracket bonding. The movable template components 250 are physically linked together by a sheet of material 252 deposited above the components 250 so that they do not break-up or otherwise become disassembled upon removal from its mold or stereolithography apparatus (SLA) model. The articulated templates are advantageous in that they provide greater adjustment flexibility.

The template can additionally be used as an etching template. An etching template allows the doctor to precisely etch the areas of the teeth on which the brackets will be placed. The small windows bound the regions that will be etched to minimize teeth sensitivity to etching or unwanted enamel removal. In another version of the etching template, the cut outs would not be formed. Instead those areas would be concavities facing the tooth surfaces. These concavities would contain an etching compound. The user would expose or activate the etching compound prior to setting the template on the teeth.

The template 220 may be made from materials that contain physical property switches for ease of removal. These switches might include temperature responsive, pH responsive, moisture responsive or a multi-layer system wherein the layers have varying physical properties. The section 500 (Fig. 5B) represents a flexible or pliable material. Additionally, the material could be fiber, cord, fiber mesh, or a fiber-reinforced solid. The interproximal material can be homogenous or heterogeneous.

The template section 252 may be made from materials that contain physical property switches for ease of removal. These switches might include temperature responsive, pH responsive, moisture responsive or a multi-layer system wherein the layers have varying physical properties. The section 252 represents a flexible or pliable material. Additionally, the material could be fiber, cord, fiber mesh, or a fiber-reinforced solid. The interproximal material can be homogenous or heterogeneous.

During one exemplary treatment using both a removable appliance (such as those described in U.S. Patent 6,309,215) and a wire and bracket appliance, a doctor can view the patient's arch(es) that require treatment during a consultation, and then select a particular wire that he/she will use to perform a portion of the treatment. Upon selection of the wire, the doctor submits this information to a virtual setup system based on the doctor's prescription. In another implementation, data mining can use previously stored data to indicate the likelihood of success, and failure rates, of tooth movement using the dental appliances. The data is categorized into three areas to describe the likelihood of successful treatment and movement: for example, a high likelihood of success; a decreased likelihood of success in treatment outcome; and little to no success. Based on the result of the data mining, the system recommends an appropriate sequence of dental appliance usage.

Sequencing is the determination of which aligner feasible movements should be performed first, according to degree of ease or needs for effective treatment outcome. One exemplary implementation of combination treatment performs high-confidence movements earlier in the treatment, followed by more challenging movements. This can mean that removable appliances are used in the first phases of treatment, followed by attachment and wire treatments. Alternatively; attachment and wire treatments can be used first for a case, with removable appliances used in the final phase of treatment. Treatment methods can also be alternated (i.e. aligners, attachments and wires, followed by aligners) and combination treatments can be used simultaneously (i.e. aligners and attachments and wires uses at the same time). Attachments and wires can be placed on the buccal or lingual sides of the teeth. The appliances can also be partial (such as a 3-3 anterior arch), combined with partial attachments and wire treatments (i.e. placed on molars or posterior teeth). In one example iteration, an IPR (interproximal reduction) is used to create space on teeth such as the bicuspid on the upper arch of a patient's jaw. Then, a wire is mounted to pull the anterior teeth back to reduce the arch size and close the interproximal space, followed by 3-3 movement that is achieved using aligners.

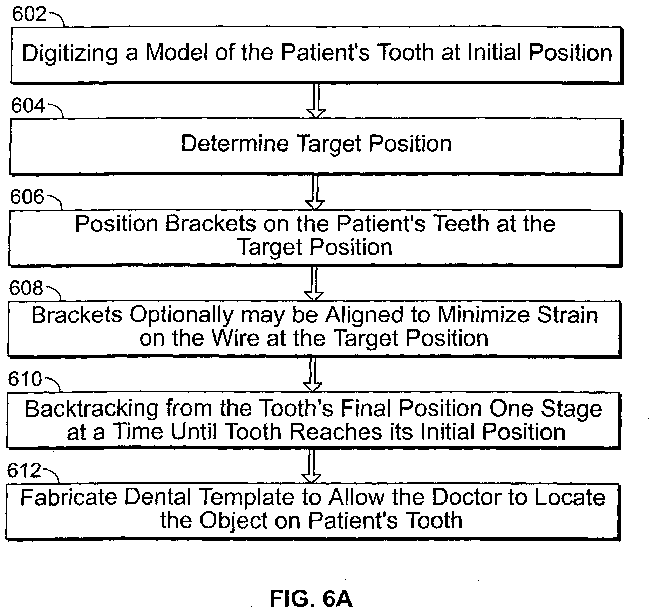

Fig. 6A illustrates a process of fabricating a dental template to position an object (such as a bracket) on a patient's tooth to move the tooth from an initial position to a target position. The process includes digitizing a model of the patient's tooth at the initial position (602). Next, the target position is determined (604). The target position can be a final position for the teeth at the end of the treatment.

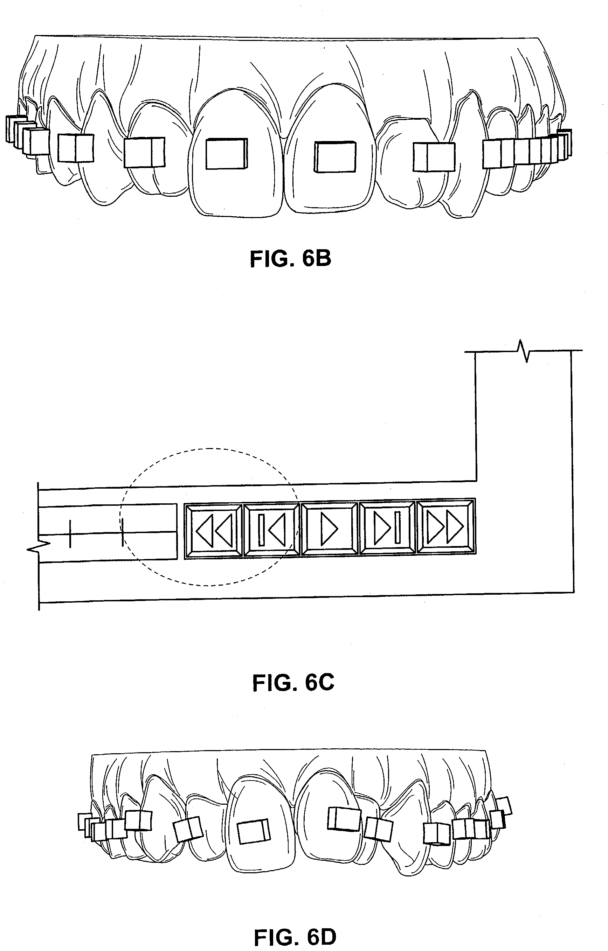

Next, after fabrication of the templates the doctor positions a plurality of brackets on the patient's teeth at the target position, each bracket having a slot adapted to receive an orthodontic wire passing therethrough (606) as illustrated in Fig. 6B showing the mounted brackets on the final position of the patient's teeth. The process optionally aligns the brackets to minimize strain on the wire at the target position (608).

The process determines the position of the object at the initial position by backtracking from the tooth's final position one stage at a time until tooth reaches its the initial position (610). The coordinate transformation for moving the tooth from its final position to its initial position is applied to determine the position of the object's initial position.

Fig. 6C shows an exemplary user interface that allows a user to visualize teeth at each treatment stage. In one example, the teeth can be backtracked one stage at a time to arrive at the initial positions. Since the brackets are secured to the teeth, the backtracked position of the brackets can also be determined. Fig. 6D shows the exemplary brackets when backtracked into their initial positions. The process can also determine a deviation of the object from an ideal placement and iteratively adjust the position of the object to minimize the deviation.

Referring back to Fig. 6A, finally, the dental template is fabricated to allow the doctor to locate the object on the patient's tooth (612). The template can be fabricated using a rapid prototyping method. One or more bracket objects can be embedded in the dental template and the dental template can be inserted over the patient's teeth. Alternatively, the bracket objects can be inserted into an opening on the dental template prior to being bonded on the teeth.

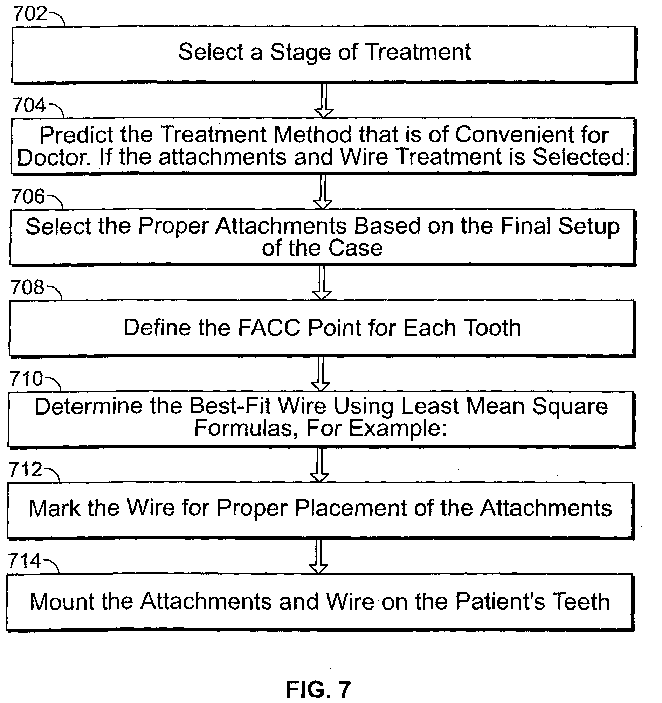

Fig. 7 describes one exemplary implementation of Combination Treatments. A stage of treatment is selected (step 702). The process makes a prediction of a treatment that is convenient for the doctor, to use either a removable appliance for treatment or to use attachments and wires (step 704).

Based on the final setup of the case, the proper attachments are selected (step 706). Once the attachments are determined, a predetermined fit value such as a FACC point is defined (step 708). Factors included in the determination of the FACC point include teeth, attachment, and wire collisions. Once the FACC point is determined, the database provides the best-fit wire for use by the doctor (step 710). Dental practitioners use individual approaches when selecting wires for patients. Some doctors use a single type of wire, others choose from a number of different wires. Alternatively, a standard wire can be used. Once selected, the wire is marked for proper placement of the attachments (step 712). Finally, the attachments and wire(s) are mounted on the patient's teeth (step 714).

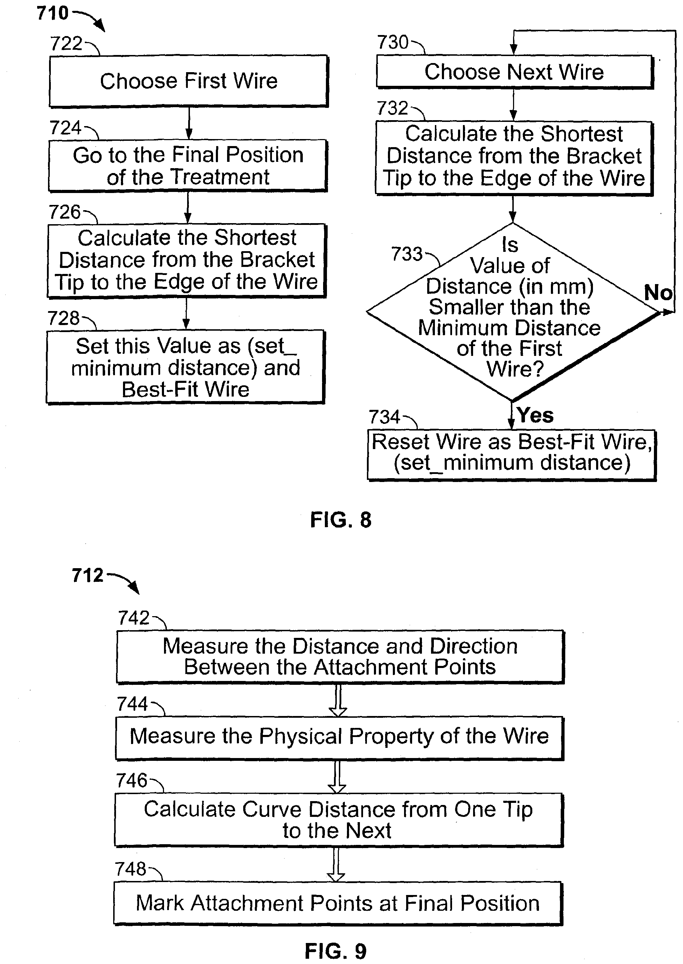

Figure 8 describes Step 710. The best-fit wire is determined using a series of simple least mean square mathematical formulas. Given a particular patient case (step 722), a wire is selected. Using the final position of the treatment (step 724), the shortest distance from the bracket tip to the edge of the wire is calculated (726).
Let d=distance between the attachment and the wire,
For any i=1-16 or 17-32, depending on which tooth /jaw,
di > 0
di < D
where D is a number defined to be between 0.1mm and 50mm. This wire is set as the best-fit wire, with the minimum distance between the attachments and wire (728). All subsequent wires are measured using the same calculations (730-734).

Fig. 9 describes more detail step 712, marking the wire for attachment placement by the doctor. Measurements are retrieved from the placement of the attachments on the jaw at the initial position. Distance and direction are measured between the points (742). Two additional areas can be measured: 1) the physical property of the wire, i.e. how much wire can bend (step 744), and 2) the curve distance from one bracket tip to the next (step 746). Finally, points are placed on the wire to show the place where the first attachment stops (step 748). The same iteration is repeated with each subsequent attachment.

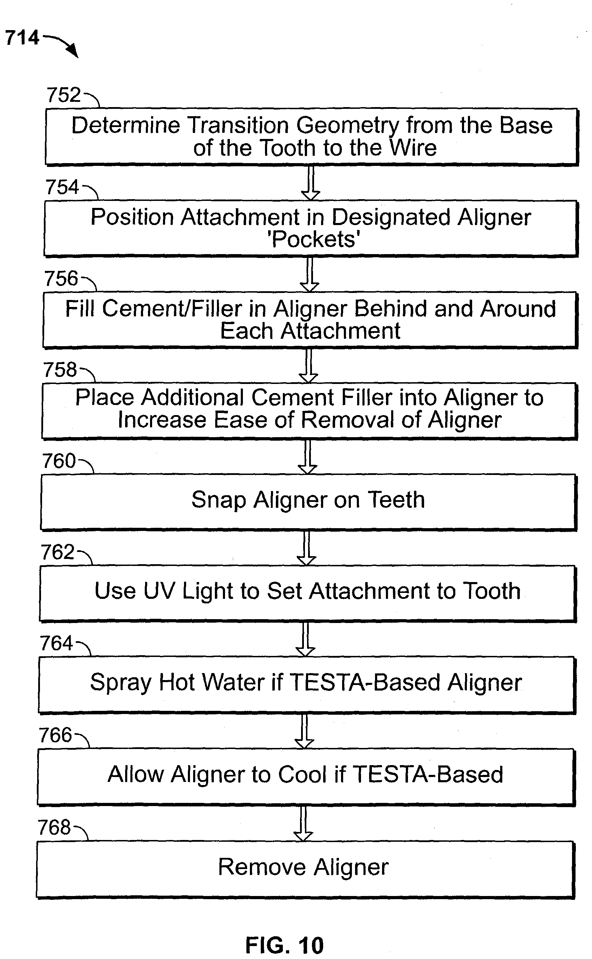

Fig. 10 describes in more detail step 714. To mount the wire and attachments, transition geometry is determined from the base of the tooth to the wire (752). Attachment object is placed inside the pocket area of the aligner (754). The filler material, most likely cement, is placed in the aligner behind the attachment and in the remaining aligner area (756 and 758). This increases ease of removal of the aligner at the later stages when the attachments are placed on the teeth. The doctor snaps the aligner with the attachment and cement on the teeth (760). Ultraviolet light is used to secure the cement filler material to the teeth (762). For Testa-based aligners, hot water is sprayed on the aligner (step 764) because the Testa material responds to the heat by becoming more pliable. Once the aligner has cooled (766), the doctor can remove it from the patient's mouth with relative ease (768). The attachment(s) are now fastened to the teeth, which follows standard orthodontics principles of placing brackets. Finally, the doctor connects the wire to each attachment using the designations that were marked on the wire in step 712 as a reference.

Exemplary pseudo-code to perform a combination treatment is as follows:
Select a stage of treatment.
Make a prediction to use attachments and wires treatment based on highest degree of convenience for doctor.
Select the proper attachments based on the final setup of the case.
Define the FACC point.
Use least mean square formulas to determine the best-fit wire.
   Choose a wire.
   Go to the final position of treatment.
   Calculate the shortest distance from the bracket tip to the edge of the wire.
   Set this value as (set_minimum distance) and best-fit wire.
   Choose next wire.
   Calculate the shortest distance from the bracket tip to the edge of the wire.
      If value of distance (in mm) is smaller than the minimum distance of the first wire, this wire is reset as best-fit wire.
      If value of distance (in mm) is larger, the first wire is selected as the best-fit.
Mark the wire for proper placement of the attachments.
   Measure the distance and direction between the attachment points.
   Measure the physical property of the wire.
   Calculate curve distance from one tip to the next.
   Mark attachment points at final position.
   If points are acceptable, repeat this iteration for each subsequent attachment.
Mount the wire and attachments on the patient's teeth.
   Determine transition geometry from the base of the tooth to the wire.
   Position attachment in designated aligner 'pockets'.
   Fill cement/filler in aligner behind and around each attachment.
   Place additional cement filler into aligner to increase ease of removal of aligner.
   Snap aligner on teeth.
   Use UV light to set attachment to tooth.
   Spray hot water on Testa-based aligner.
   Allow aligner to cool.
   Remove aligner.

Thus, the above process determines an optimum treatment sequence based on historical data; and fabricating one or more dental devices to move teeth, the devices being selected from either a computer-synthesized retainer or a combination of attachments and wire. The determining of an optimum treatment sequence can include capturing a digital model of a patient's teeth; and comparing the digital model to a library of historical treatment cases. The treatment can include moving teeth using the retainers and at the end of treatment with aligners, fabricate a retainer with the attachments embedded therein.

Orthodontic brackets are designed and produced with a fixed base profile for a given manufacturer prescription, and usage. The bracket base is that surface that is the interface with the tooth. Since a patient's tooth morphologies are unique, the bracket base and its underlying tooth may not mate well. Typically, a gap exists between the bracket base and the tooth surface. This gap needs to be filled to form a "Custom Base". The custom base may involve adjusting the angulation and/or inclination of the bracket base when it is applied to the tooth.

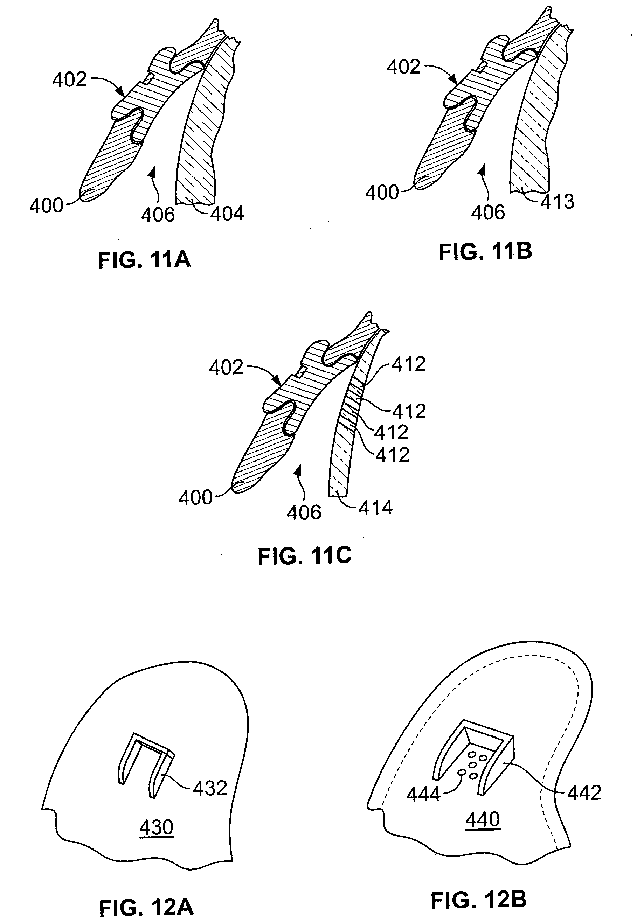

Figs. 11A-11C show another embodiment that enables controlled placement of the bracket base on a tooth 404. Fig. 11A shows the template 400 over the tooth 404, while Fig. 11B shows the template 400 over a model 413. The template 400 contains a bracket 402. A gap 406 exists between the tooth 404 and the template 400. In Fig. 11B, the gap 406 exists between bracket and model. The bracket is located in its preferred position with a predetermined torque (inclination) and a predetermined tip (angulation). Figure 11C shows the template on a shelled model which has through holes so the gap may be filled from within the model 414. A suitable epoxy is applied to fill the gap.

The bonding template can spatially fix the bracket while still leaving access to the gap 406. The template can be applied to an actual tooth or a model of the tooth. This access could be through the appropriate geometry in the template with or without an applicator designed for the purpose.

In the case of using the model of tooth, the model could be a shell that has hole(s) 412 to access the back of the bracket 402. Also, the customized base could be formed by pressing one model into another while the bracket is spatially fixed by the template 400. In this case, the outer 'model' would be a structure similar to the template, but more rigid and covers more of the teeth's surfaces. The inner 'model' would represent of the actual teeth. The base gap would have been first filled with a bonding medium (e.g. adhesive). When the two models are fit together, the bonding medium is compacted into the gap and any excess flash around the bracket is removed. Yet another method would have a hollow model to represent the teeth, a template over this to fix the brackets in space, and a second model that nests in the first hollow model. When this latter is pressed into the hollow model, adhesive is forced through holes in the hollow model that are located behind the brackets' bases. After curing the adhesive, the two models are removed so the brackets and their custom bases remain in the template.

The template with the pre-specified or predetermined inclination or angulation is designed as follows. First, the system digitizes the patient's tooth. Next, an operator uses a dental CAD system to add a virtual object to a predetermined location on the digitized tooth. The CAD system is used to move the virtual object to a predetermined inclination or a predetermined angulation above the tooth. The resulting data is sent to a fabrication machine to fabricate the dental template to specifically locate the object on the patient's tooth with the determined inclination and/or angulation.

During use, a dental professional mounts the orthodontic object or bracket on the template and places the template on the patient's teeth or a model thereof. Since the template holds the bracket at the pre-specified angulation and/or inclination, the base of the bracket is accurately positioned above the tooth. The dental professional injects epoxy into the gap between the bracket and the tooth to bond the orthodontic object to the tooth with the desired angulation and/or inclination.

Figs. 12A-12B show other embodiments to position the orthodontic object to the tooth with the desired angulation and/or inclination. In the embodiment of Fig. 12A, a plurality of rails 432 is formed on a tooth model 430. In the embodiment of Fig. 12B, rails 442 are also positioned on a tooth model 440. A plurality of openings 444 is provided on the model 440 to allow access to the base of a bracket that seats on or in the rails. The rails 432 and 442 are designed to provide proper angulation and/or inclination of the brackets on the tooth in addition to the proper locus.

In one embodiment, two or more rails or ridges are created along outside edges of a bracket on a suitable model substrate. The substrate can be Plaster, Resin, or Polymer substrate. A bonding medium is applied over the vicinity of the base. The bonding medium or epoxy may flow beyond the dimensions of the base. The bracket is then pressed against the rails or into channels in the rails which conform to the bracket base to force the correct spatial positioning and also limit it to the correct facial position. The rails also limit the base of the bracket to the correct facial position. The bonding medium is then cured. The bracket and custom base are removed from the substrate, which preferentially does not support or allow for a resilient bond to the adhesive.

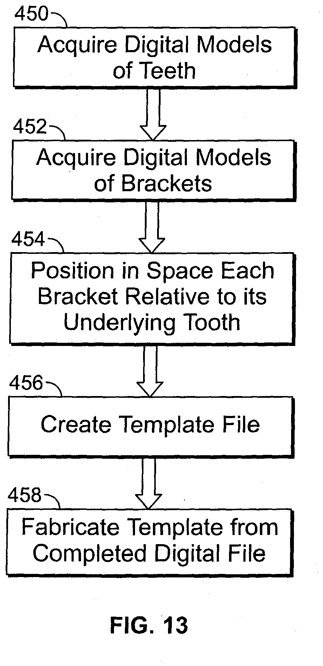

Turning now to Fig. 13, an exemplary process to form a template that can position a bracket in any arbitrary three-dimensional position is shown. First, the process acquires a digital model of teeth (450). Next, the process acquires digital models of brackets to be supported by the template (452). Next, the process positions in 3D space each bracket relative to its underlying tooth (454). Methods of determining these positions include: Andrews' Straight Wire, Roth, MBT, measuring the distance and angles between bracket geometries and biological referents, or based on doctors' specific theories or philosophies. The process then creates a template file as disclosed herein (456). The template is fabricated from the completed digital file 458.

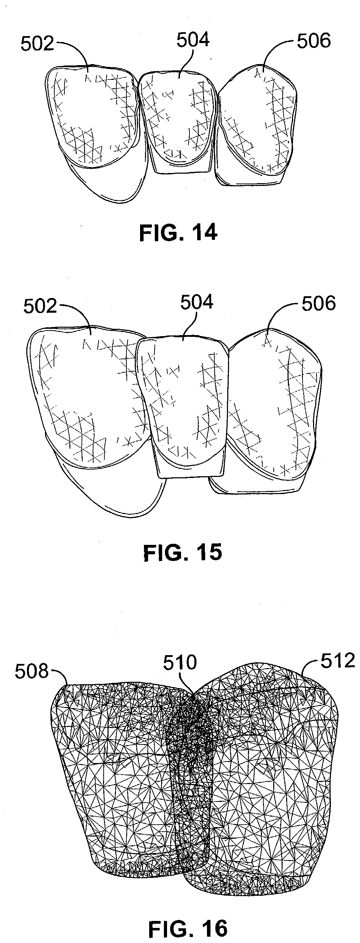

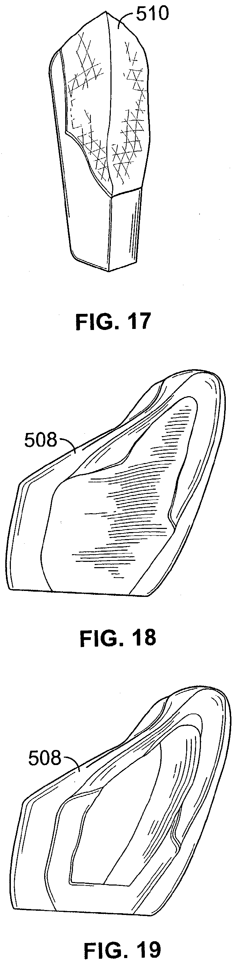

Fig. 14 illustrates a presentation of three scanned or otherwise captured digital models or representations of human teeth 502, 504, 506, at 100% scale. Fig. 15 illustrates scaled tooth models from those of Fig. 14. In this embodiment, the scaling factor is 140%, but the scaling can be between approximately 105% and 150%. Fig. 16 shows where the tooth models 508 and 512 overlap. A wire frame representation is used to show a common volume 510. This common volume identifies bodies that may conflict with creating a suitable template. Fig. 17 shows a solid representation of a septum 510.

Figs. 18 and 19 show a scaled tooth model 508, in this case the tooth model 508 is scaled up 140%. Fig. 18 shows a removal from the near side (side closest to viewer) of the model of the common volume 510 shared between the tooth model 508 and its adjacent tooth model 512. Fig. 19 shows the tooth model 508 with the common volume 510 removed from the near surface of the tooth and with the 100% tooth model subtracted from the tooth model 508. Fig. 19 thus is a shell that covers the 100% tooth model.

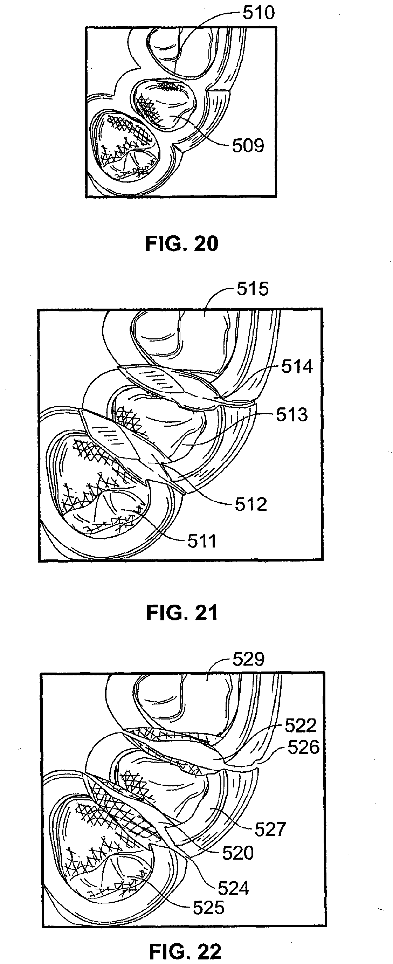

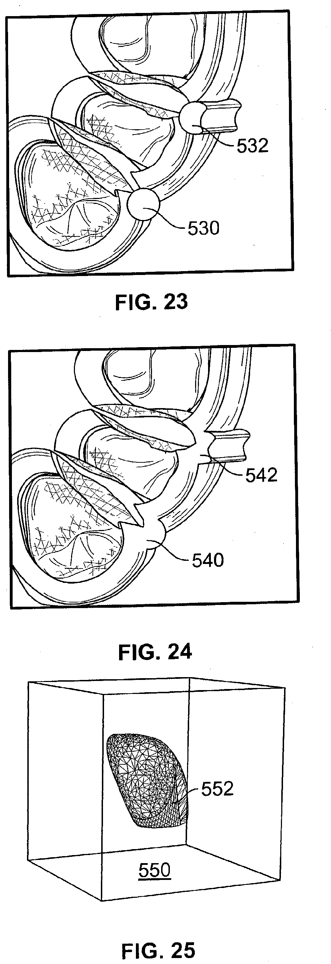

Figs. 20 and 21 illustrate the need to remove the common volume 510 from adjacent tooth models. Fig. 20 illustrates the subtraction of original tooth models of Fig. 14 from scaled tooth models of Fig. 15 to form cavities 509 that are separated by the septa 510. Such formations would preclude the template from being placed over a patient's teeth. In Fig. 21, the common volumes 512 and 514 are positioned between the tooth model 511 and the tooth model 513 and between the tooth model 513 and the tooth model 515. The volumes 512 and 514 are shown prior to their removal or subtraction. Fig. 22 illustrates models with common volumes removed from the template model. In this case, the common volumes 520 and 522 are enlarged for clarity but in practice at volume size it would be defined by the scaling factor of the teeth that lead to the common volume shape. Figs. 23 and 24 show the addition of buttresses or means for connecting disjoint tooth models. Referring back to Fig. 22, once those common volumes 520 and 522 have been removed, gaps 524 and 526 may exist between the tooth models 525, 527 and 529, respectively.

Figs. 23-24 show a formation of a solid body that is one continuous template to be positioned on a patient's teeth. In the case of Fig. 23, the joining elements or buttress elements 530-532 are inserted as separate bodies after the creation of the template model. Buttress element 530 is a circular element, while buttress element 532 is a crescent shaped element. These represent two possibilities for shapes, many others are possible. The surfaces of the buttress elements are joined to the surfaces of the template model. Fig. 24 shows the addition of buttressing elements 540-542 subsequent to the above operation for forming cavities. In this operation, one continuous body which is comprised of the three tooth models as well as the buttressing elements 540-542, is formed all at once. In both cases, the buttress elements are built into the template model. Subsequent steps may be taken to further shape the template model or elements thereof.

Pseudo-code for generating a template using the tooth scaling approach is as follows:
1. A digital representation of a tooth is acquired through scanning or other digitization means.
2. This tooth file is opened in a computer application that allows a user to alter it or that itself alters the file.
3. The tooth is enlarged to a scale greater than 100%--typically in the range of 105 to 150%; and saved as a separate file.
   ▪ The original tooth file (i.e. 100% scales) is co-located within the scaled tooth.
   ▪ The original tooth's geometry is subtracted from that of the scaled tooth to leave a hollowed or shelled body.
   ▪ The root and other sub-gingival aspects are removed from this body. The removal can be performed through the use of additional bodies or surfaces that cut, cavity, or are subtracted from the body to be kept.
      Adjacent tooth cavity method A.
   ▪ Solid (not hollow), scaled versions of adjacent teeth are subtracted from this body where the bodies overlap or intersect.
      Adjacent tooth cavity method B.
   ▪ The geometry common to the object tooth and adjacent teeth is subtracted from this body. This step is best performed before the hollowing of the object tooth.
4. All teeth in the target arch which are to be part of the template are then brought together in their proper relative positions and orientations to form the template for this arch.
5. Exterior interproximal regions are filled in, as needed, to join the tooth shell segments together. This 'buttressing' process has numerous possibilities, among them:
   ▪ Add a solid body that extends beyond the teeth's buccal surfaces and re-cavity it where it would otherwise collide with the teeth.
   ▪ Individually fill the interproximal regions between adjacent teeth outward from the buccal surfaces of the 100% and/or scaled teeth.
   ▪ Add another, larger-scaled tooth over each respective tooth and re-cavity it where it would otherwise collide with the underlying tooth.
   ▪ Allow the interproximal regions to be disjoint, but connect the individual teeth by applying a solid body on and into the incisal/occlusal surfaces. Re-cavity this as necessary.
6. Any unwanted or interfering geometries are removed. This may include the positions for brackets or other orthodontic or dental components. As noted above, the removal can be performed through the use of additional bodies or surfaces that are used to cut, cavity, or subtract from the kept body/bodies.
7. If necessary, the resultant file is converted to a format required by the rapid-prototyping method.

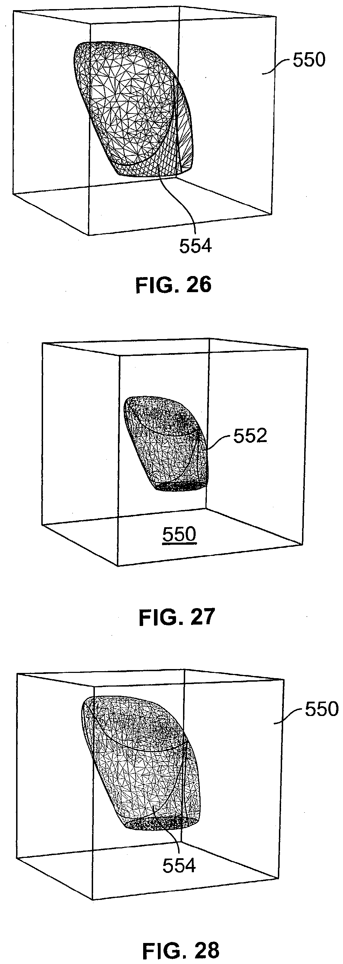

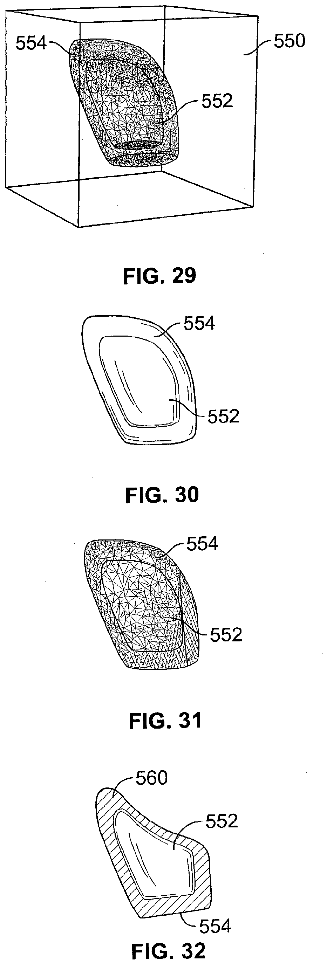

Figs. 25-32 show various diagrams illustrating an overlaid cavities embodiment. In Fig. 25, a block 550 is used as an arbitrary body and a 100% scaled tooth model 552 has been placed inside that body. In Fig. 26, the same block 550 with the same dimensions in every aspect as the body of block 550 in Fig. 25 contains a scaled tooth 554 (such as a 140% scaled tooth model). In each case, the body fully encompasses the original and scaled tooth models. In Fig. 27, the 100% tooth has been cavitied or hollowed from the block 550, and in Fig. 28, the 140% scaled tooth model 554 is cavitied from the block 550. In Fig. 29, the cavitied block 550 that contained the 100% tooth model 552 is co-located with the cavitied block 550 that contained the 140% tooth model 554 so that the model 552 is inside the model 554.

Fig. 30 shows a subtraction of the cavity blocks 550 for the 100% tooth model and the cavity block 550 for the scaled tooth model to create a body defined by the area between the 100% scale and the 140% scale models 552 and 554, respectively. A wire frame model of the scaled tooth model 554 with a solid model of the original 100% tooth model 552 is shown in Fig. 31. Fig. 32 is a cross sectional view of the models of Fig. 31 to show a shell 560 that surrounds the 100% scaled tooth model 552 with the outer surface being defined by the scaled tooth model 554.

Pseudo code for performing the overlaid cavity embodiment is as follows:
1. A digital representation of a tooth is acquired through scanning or other digitization means.
2. This tooth file is opened in a computer application that allows a user to alter it or that itself alters the file.
3. A body that more than encompasses the space occupied by all the teeth is created or opened in the application. This is Block 550 in the images. Alternately, encompassing bodies may be created for an individual tooth or groups of teeth. These bodies would later be brought together into one template file (Fig. 25).
4. Preferentially, all object teeth are moved into this file into their proper positions and orientations. The body is then cavitied with the teeth. Alternately, the body could be successively cavitied by individual teeth. The resultant body is saved.
5. Each tooth is then enlarged to a scale greater than 100%--typically in the range of 105 to 150%; and saved as a separate file.
6. A second, identical, all-encompassing body (550) is created or opened in the application (Fig. 26).
7. Step 4 is repeated for Block 550 (Fig. 26) with the difference being that the scaled teeth of Step 5 are used. Alternately, it is not required to create and use scaled teeth. Rather, the original teeth may be cavitied in Block 550 at a larger than 100% scale.
8. Block 550 of Fig. 25 and Block 550 of Fig. 26 are co-located in one of their files or in a new file that preferentially contains only these two objects.
9. Block 550 of Fig. 26 is subtracted from Block 550 of Fig. 25. This leaves one or more shelled bodies-the exterior surfaces defined by the scaled teeth and the interior surfaces by the original, unscaled teeth.
10. The roots and sub-gingival aspects are removed from the body/bodies. The removal can be performed through the use of additional bodies or surfaces that cut, cavity, or are subtracted from the body to be kept.
11. Successively or contemporaneously, the geometry common to an object tooth and its adjacent teeth is subtracted from the body/bodies.
12. Exterior interproximal regions are filled in, as needed, to join the tooth shell segments together. This 'buttressing' process has numerous possibilities:
   ▪ Add a solid body that extends beyond the teeth's buccal surfaces and re-cavity it where it would otherwise collide with the teeth.
   ▪ Individually fill the interproximal regions between adjacent teeth outward from the buccal surfaces.
   ▪ Add another, larger-scaled tooth over each respective tooth and re-cavity it where it would otherwise collide with the underlying tooth.
   ▪ Allow the interproximal regions to be disjoint, but connect the individual teeth by applying a solid body on and into the incisal/occlusal surfaces. Re-cavity this as necessary.
   ▪ The buttressing can be placed or enacted on the scaled teeth prior to, at the same time as, or subsequent to Steps 7 and/or 8. It is preferentially performed prior to Step 9.
13. Any unwanted or interfering geometries are removed, e.g. internal interproximal regions. This removal may include the positions for brackets or other orthodontic or dental components. The removal can be effected as described above.
14. If necessary, the resultant file is converted to a format required by the rapid-prototyping method.

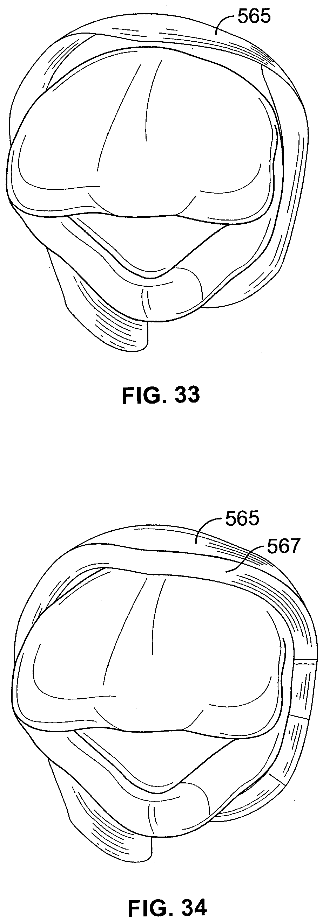

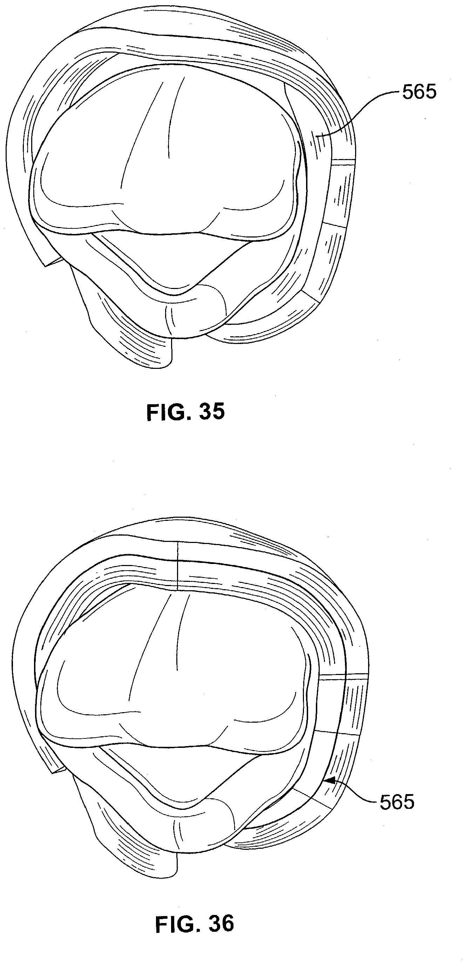

Fig. 33 illustrates another embodiment for scaling a tooth model. In this embodiment, the original tooth model surface is off-set (565) using a predetermined mathematical formula or predetermined points or constraints. The embodiment offsets numerous surfaces to show alternative methods to enlarging the tooth model or creating a surface that bounds the same shape but in a large scale of the tooth model. Fig. 34 thickens the surface (565) from Fig. 33 inward towards the tooth to form body 567. Fig. 35 is that same surface (565) but now thickening it outward away from the tooth and Fig. 36 is showing thickening both inward and outward at the same time.

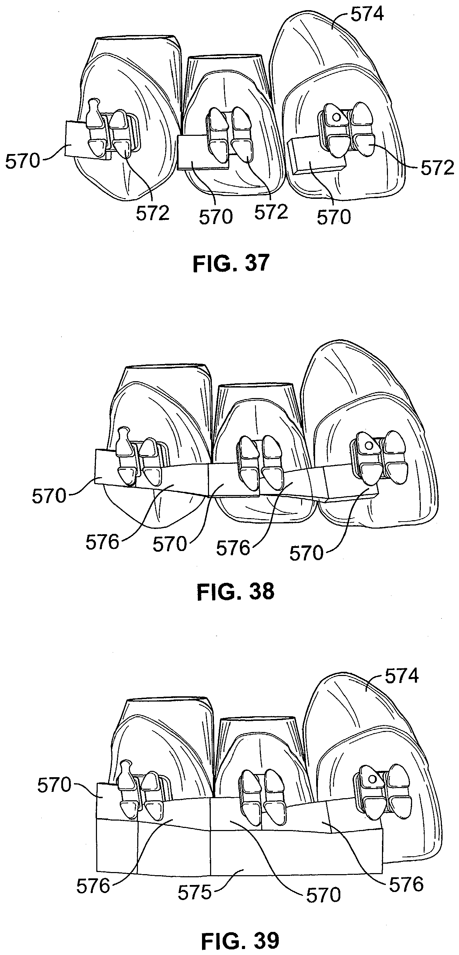

Figs. 37-40 show another embodiment for creating a template. In this embodiment, a geometric body 570 (Fig. 37) is placed so that it abuts an orthodontic component 572 on a tooth 574. In one embodiment, the component 572 is a bracket. The bracket position defines where this added body lies; in this case the corner of the body 570 abuts the bracket 572 on two sides. In the embodiment of Figs. 37-40, three brackets have been placed and three geometric bodies are positioned against the brackets 572 in Fig. 37. In Fig. 38, bodies 570 are joined with the two joining elements 576 between bodies 570. In Fig. 39 the structure of Fig. 38 is extended up to or beyond the teeth, for example, the incisor or occlusal surfaces. Figs. 39-40 show an occlusal view as well as a buccal view of the bodies 570 and joining elements 576 on teeth 574. In Figs. 39-40, an extended body 575 is linked to the bodies 507 and 576 to extend the height of the attachment combination.

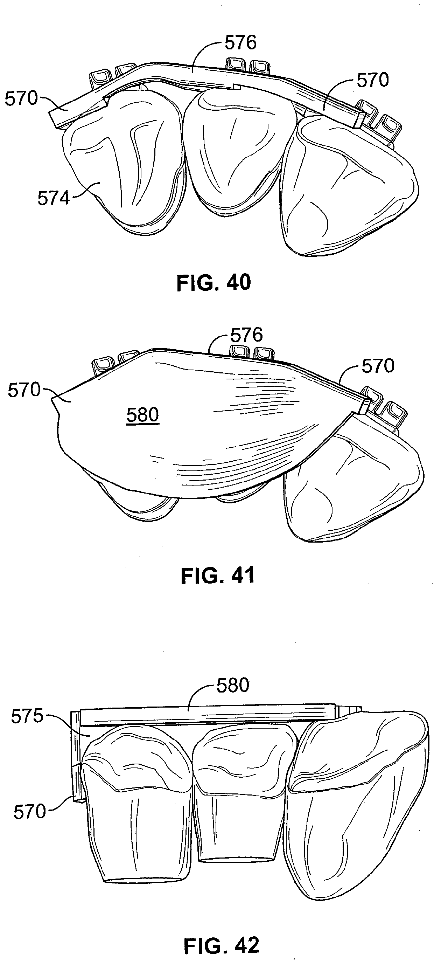

Figs. 41 and 42 show that once the bodies 570 have been extended as shown in Figs. 39 and 40, an additional coverage body 580 can be positioned over the occlusal or incisal surfaces to fully define where the template is in space relative to the teeth and in this case a simple plate shape is shown. However, more complex geometries can be used.

Pseudo-code for the Tooth Plating embodiment is as follows:
1. A digital representation of a tooth is acquired through scanning or other digitization means.
2. This tooth file is opened in a computer application that allows a user to alter it or that itself alters the file.
3. The orthodontic or dental component is placed on the tooth in its intended position. Alternately, the plate is placed with respect to where it is known the component will be placed.
4. A body is placed on, into, and/or over the tooth so it abuts the component with contact sufficient to limit its degrees of freedom as desired. This body may be a standardized shape or customized relative to tooth type or specifically to a given patient's tooth or teeth. At minimum, this body will have these characteristics or features: a buccolingual thickness greater than approximately half the this dimension of the component, but generally less than the sum of the thicknesses of the component and its respective tooth; a mesiodistal length that may be greater than, less than, or equal to the tooth's mesiodistal width; and an occlusogingival height that may be greater than, less than, or equal to the height of the tooth. The body could be simply rectalinear or as complex as the tooth or mouth morphology and could also include a mating cavity for the orthodontic component. Or the component could subsequently be cavitied in the body when the latter is merely approximately positioned.
5. After all teeth have been 'plated', the plates are merged, connected, or joined where there are gaps and cut, trimmed, or shaped where they are undesirably protrusive. An incisal/occlusal element could also be merged into the plates at this time.
6. If necessary the tooth bodies are subtracted from the body comprised of the plates and any incisal/occlusal element.
7. Any unwanted or interfering geometries are removed. This may include the positions for brackets or other orthodontic or dental components. See above for methods of removal.
8. If necessary, the resultant file is converted to a format required by the rapid-prototyping method.

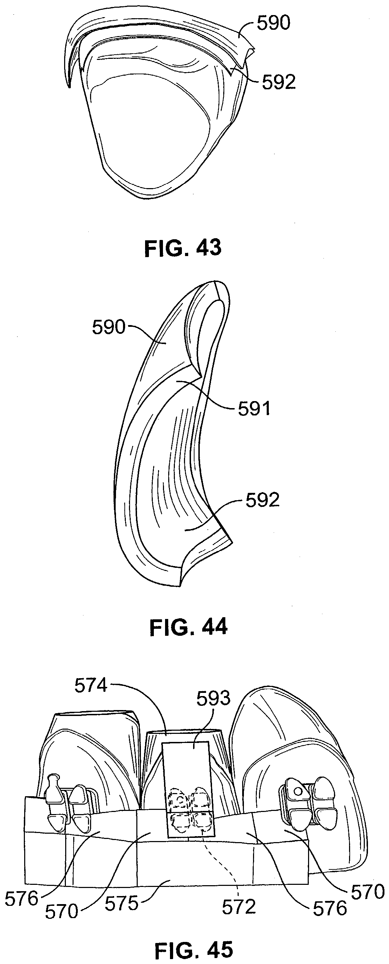

Figs. 43 and 44 show another embodiment of the surface off-set method. In this embodiment, two surfaces 590 and 592 are used rather than just one surface. In Fig. 43, one surface 592 is offset at or near the tooth. A second surface 590 is offset at a distance larger than the distance from surface 592 resulting in two surfaces that are essentially congruent but located at a different distance. Fig. 44 shows the two surfaces 590 and 592 bounding a solid body. The solid body can be specified in a number of ways. For example, one surface can be extruded towards the other surface alternatively, the edges (591) where the surfaces gap can be closed.

Pseudo-code for Surface Off-setting is as follows:
1. A digital representation of a tooth is acquired through scanning or other digitization means
2. This tooth file is opened in a computer application that allows a user to alter it or that itself alters the file.
3. The surface(s) of the tooth is offset to a desired distance.
4. This surface is thickened in a radially outward direction if the offset distance is greater than zero. The surface is thickened in a radially inward or inward and outward if the distance is greater than zero. The inwardly directed thickness preferentially does not penetrate the surface of the tooth. However, if it does, the tooth body could be subsequently subtracted from the solid created by thickening the offset surface(s).
5. Any unwanted or interfering geometries are removed. These may include the interproximal areas as well as the positions for brackets or other orthodontic or dental components. See above for removal methods.
6. If necessary, the resultant file is converted to a format required by the rapid-prototyping method.

Pseudo-code for Multiple Surface Off-setting is as follows:
1. A digital representation of a tooth is acquired through scanning or other digitization means
2. This tooth file is opened in a computer application that allows a user to alter it or that itself alters the file.
3. The surface(s) of the tooth is offset to a desired first distance.
4. The surface(s) of the tooth is offset to a second desired distance, preferentially greater or less than the first distance.
5. The volume between the first and second surfaces is then filled to create a solid body.
6. If one of the offset distances sets the corresponding surfaces inside the tooth body, the solid body can be cavitied with the original tooth body.
7. Any unwanted or interfering geometries are removed. These may include the interproximal areas as well as the positions for brackets or other orthodontic or dental components. See above for removal methods.
8. If necessary, the resultant file is converted to a format required by the rapid-prototyping method.

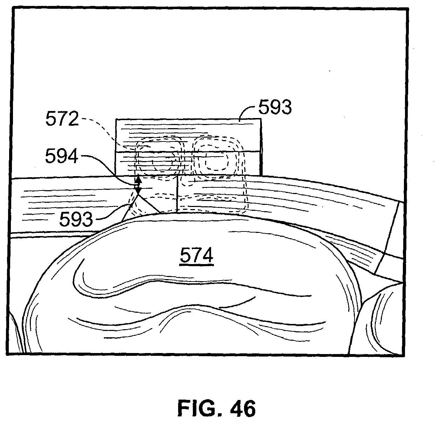

Figs. 45 and 46 show one embodiment of template cutting. A cutting body 593 partially encompasses the underlying bracket 572 to create a 'window' in the template wherein the bracket can be positioned and affixed while still allowing for subsequent removal of the template. In one embodiment, the cutting body 593 has a simple geometry. Other shapes could encompass more or less of the underlying orthodontic or dental component based on need or intent. Further, the shape of the body 593 could be more complex to create additional benefits such as a partial lock to hold the component 'hands free' in place, cause a seam along which the template is readily broken for removal, or allow for easier access for bonding or curing. In this example, the encompassing body 593 continues lingual to the template's buccal surface to cause a sharp-edged thin area 594 along whose buccal edge it is made easier to break the template.

The body 593 creates a cutout in the template to position an orthodontic or dental component such as a bracket. It may not be necessary to capture all the geometry, rather to capture aspects of the geometry sufficient to locate that bracket or component in the right location. In this case, the central tooth has a body over the bracket. This body extends gingivally beyond the bracket body so the bracket can be placed in the template and bonded on the tooth and subsequently the template can be removed.

Fig. 46 is an occlusal view of the same bracket, body, and template portion but showing other features that can be incorporated in the body. In this case, there is a triangular aspect in cutting body 593 that will cut into the template to create a breaking edge 594 or a break away line. More complex geometries can be used for severely rotated or severely tipped teeth since there might need to be different access paths to position one or more of the components and that may also facilitate template removal.

The above templates can also position the bracket in any arbitrary 3D position to support a predetermined angulation and inclination specification for a bracket. In that case, the template would fix the bracket in space relative to the tooth.

Various alternatives, modifications, and equivalents may be used in lieu of the above components. Additionally, the techniques described here may be implemented in hardware or software, or a combination of the two. The techniques may be implemented in computer programs executing on programmable computers that each includes a processor, a storage medium readable by the processor (including volatile and nonvolatile memory and/or storage elements), and suitable input and output devices. Program code is applied to data entered using an input device to perform the functions described and to generate output information. The output information is applied to one or more output devices. Each program can be implemented in a high level procedural or object-oriented programming language to operate in conjunction with a computer system. However, the programs can be implemented in assembly or machine language, if desired. In any case, the language may be a compiled or interpreted language. Each such computer program can be stored on a storage medium or device (e.g., CD-ROM, hard disk or magnetic diskette) that is readable by a general or special purpose programmable computer for configuring and operating the computer when the storage medium or device is read by the computer to perform the procedures described. The system also may be implemented as a computer-readable storage medium, configured with a computer program, where the storage medium so configured causes a computer to operate in a specific and predefined manner. Further, while the invention has been shown and described with reference to an embodiment thereof, those skilled in the art will understand that the above and other changes in form and detail may be made without departing from the scope of the following claims.

## Claims

1. A method of fabricating a dental template for positioning an object on a patient's tooth, comprising:
creating a digital tooth model of the patient's tooth;
adding a virtual object to a predetermined location on the digital tooth model;
scaling the digital tooth model;
superimposing the scaled digital tooth model over the original digital tooth model; and
fabricating the dental template based on the scaled digital tooth model and the original digital tooth model to locate a said object on the patient's tooth.

2. The method of claim 1, wherein a virtual object is placed on the superimposed scaled digital tooth model.

3. The method of claim 1, wherein the virtual object is placed at a predetermined location and orientation in the superimposed scaled digital tooth model.

4. The method of claim 1, 2 or 3, the method further comprising removing the digital tooth model from the scaled digital tooth model to form a virtual appliance.

5. The method of any preceding claim, the method further comprising removing digitized structures at, below, or along the gingival line.

6. The method of any preceding claim, further comprising removing digitized structure in proximal contact with an adjacent tooth.

7. The method of any preceding claim, wherein fabricating comprises rendering a physical dental template using a rapid prototyping method.

8. A method according to claim 1, wherein:
creating the digital tooth model comprises digitizing the patient's tooth;
the virtual object is added as a virtual representation of the object to the predetermined
location on the digitized tooth; and
the dental template locates the object on the patient's tooth.

9. The method of any preceding claim, wherein virtual objects are added to predetermined locations on a plurality of the digital tooth models, and fabricating the dental template produces an orthodontic bonding template comprising a shell having a plurality of cavities shaped to be inserted over the patient's teeth to locate the objects on the patient's teeth.

10. The method of any of claims 1 to 8, wherein the fabricating produces an orthodontic bonding template comprises a shell having a plurality of cavities shaped to be inserted over a patient's teeth, the shell having an opening at the predetermined location to receive as a said object an orthodontic device.

11. The method of claim 10, wherein the opening comprises a window to allow a bonding agent to be applied to a predetermined area on the tooth.

12. The method of claim 9, 10 or 11, wherein the shell is polymeric.

13. The method of any of claims 9 to 12, wherein the fabricating produces a shell comprising a curvaceous edge on the opening to secure the orthodontic device to the shell.

14. The method of any of claims 9 to 13, wherein the orthodontic device is a bracket.

15. The method of any of claims 9 to 14, wherein the fabricating is a direct fabrication process.

16. The method of any of claims 9 to 15, wherein the shell is articulatable with a plurality of flexibly linked cavities.

17. The method of any of claims 9 to 15, wherein the fabricating produces the shell as an unarticulated unit.

18. A computer program product for performing the method of one of the claims 1-17, the computer program product comprising program instructions for causing a computer to: create a digital model of the patient's tooth; add a virtual object to a predetermined location on the digital tooth model; scale the digital tooth model; and superimpose the scaled digital tooth model over the original digital tooth model to enable fabrication of a dental template based on the scaled digital tooth model and the original digital tooth model to locate a said object on the patient's tooth position.

19. The computer program product of claim 18, further comprising program instructions for causing a computer to cause fabrication of the dental template.

20. The computer program product of claim 19, wherein the program instructions cause a computer to carry out a method in accordance with any of claims 2 to 17.

21. Apparatus for performing the method of one of the claims 1-17, the apparatus comprising: means configured to create a digital model of the patient's tooth; means configured to add a virtual object to a predetermined location on the digital tooth model; scale the digital tooth model; and means configured to superimpose the scaled digital tooth model over the original digital tooth model to enable fabrication of a dental template based on the scaled digital tooth model and the original digital tooth model to locate a said object on the patient's tooth.

## Patentansprüche

1. Ein Verfahren zum Herstellen einer Dentalschablone zum Positionieren eines Objekts auf einem Zahn eines Patienten, das Folgendes beinhaltet:
Erstellen eines digitalen Zahnmodells des Zahns des Patienten;
Hinzufügen eines virtuellen Objekts zu einem vorbestimmten Ort auf dem digitalen Zahnmodell;
Skalieren des digitalen Zahnmodells;
Überlagern des ursprünglichen digitalen Zahnmodells mit dem skalierten digitalen Zahnmodell; und
Herstellen der Dentalschablone auf der Grundlage des skalierten digitalen Zahnmodells und des ursprünglichen digitalen Zahnmodells, um ein genanntes Objekt auf dem Zahn des Patienten zu lokalisieren.

2. Verfahren nach Anspruch 1, wobei ein virtuelles Objekt auf dem überlagerten skalierten digitalen Zahnmodell platziert wird.

3. Verfahren nach Anspruch 1, wobei das virtuelle Objekt an einem vorbestimmten Ort und mit einer vorbestimmten Ausrichtung in dem überlagerten skalierten digitalen Zahnmodell platziert wird.

4. Verfahren nach Anspruch 1, 2 oder 3, wobei das Verfahren ferner das Entfernen des digitalen Zahnmodells von dem skalierten digitalen Zahnmodell beinhaltet, um eine virtuelle Apparatur zu bilden.

5. Verfahren nach einem der vorhergehenden Ansprüche, wobei das Verfahren ferner das Entfernen digitalisierter Strukturen an dem, unter dem oder entlang des Zahnfleischrands beinhaltet.

6. Verfahren nach einem der vorhergehenden Ansprüche, das ferner das Entfernen digitalisierter Strukturen in nahem Kontakt mit einem benachbarten Zahn beinhaltet.

7. Verfahren nach einem der vorhergehenden Ansprüche, wobei das Herstellen das Rendern einer physischen Dentalschablone unter Verwendung eines Rapid-Prototyping-Verfahrens beinhaltet.

8. Verfahren nach Anspruch 1, wobei:
das Erstellen des digitalen Zahnmodells das Digitalisieren des Zahns des Patienten beinhaltet;
das virtuelle Objekt als eine virtuelle Darstellung des Objekts zu dem vorbestimmten Ort auf dem digitalisierten Zahn hinzugefügt wird; und
die Dentalschablone das Objekt auf dem Zahn des Patienten lokalisiert.

9. Verfahren nach einem der vorhergehenden Ansprüche, wobei virtuelle Objekte zu vorbestimmten Orten auf einer Vielzahl der digitalen Zahnmodelle hinzugefügt werden und das Herstellen der Dentalschablone eine kieferorthopädische Klebeschablone produziert, die eine Hülse mit einer Vielzahl von Hohlräumen beinhaltet, die so geformt ist, dass sie über die Zähne des Patienten eingesetzt werden kann, um die Objekte auf den Zähnen des Patienten zu lokalisieren.

10. Verfahren nach einem der Ansprüche 1 bis 8, wobei das Herstellen eine kieferorthopädische Klebeschablone produziert, die eine Hülse mit einer Vielzahl von Hohlräumen beinhaltet, die so geformt ist, dass sie über die Zähne des Patienten eingesetzt werden kann, wobei die Hülse eine Öffnung an dem vorbestimmten Ort hat, um eine kieferorthopädische Vorrichtung als ein genanntes Objekt aufzunehmen.

11. Verfahren nach Anspruch 10, wobei die Öffnung ein Fenster beinhaltet, um das Aufbringen eines Klebemittels auf einen vorbestimmten Bereich auf dem Zahn zu erlauben.

12. Verfahren nach Anspruch 9, 10 oder 11, wobei die Hülse polymer ist.

13. Verfahren nach einem der Ansprüche 9 bis 12, wobei das Herstellen eine Hülse produziert, die einen gebogenen Rand auf der Öffnung beinhaltet, um die kieferorthopädische Vorrichtung an der Hülse zu sichern.

14. Verfahren nach einem der Ansprüche 9 bis 13, wobei die kieferorthopädische Vorrichtung eine Klammer ist.

15. Verfahren nach einem der Ansprüche 9 bis 14, wobei das Herstellen ein direkter Herstellungsprozess ist.

16. Verfahren nach einem der Ansprüche 9 bis 15, wobei die Hülse mit einer Vielzahl von flexibel verknüpften Hohlräumen gelenkig beweglich ist.

17. Verfahren nach einem der Ansprüche 9 bis 15, wobei das Herstellen die Hülse als eine nicht gelenkig verbundene Einheit produziert.

18. Computerprogrammprodukt zum Durchführen des Verfahrens nach einem der Ansprüche 1-17, wobei das Computerprogrammprodukt Programmanweisungen beinhaltet, um den Computer zu Folgendem zu veranlassen:
Erstellen eines digitalen Modells des Zahns des Patienten; Hinzufügen eines virtuellen Objekts zu einem vorbestimmten Ort auf dem digitalen Zahnmodell; Skalieren des digitalen Zahnmodells; und Überlagern des ursprünglichen digitalen Zahnmodells mit dem skalierten digitalen Zahnmodell, um die Herstellung einer Dentalschablone auf der Grundlage des skalierten digitalen Zahnmodells und des ursprünglichen digitalen Zahnmodells zu ermöglichen, um ein genanntes Objekt auf der Zahnposition des Patienten zu lokalisieren.

19. Computerprogrammprodukt nach Anspruch 18, das ferner Programmanweisungen beinhaltet, um einen Computer zu veranlassen, die Herstellung der Dentalschablone zu veranlassen.

20. Computerprogrammprodukt nach Anspruch 19, wobei die Programmanweisungen einen Computer dazu veranlassen, ein Verfahren nach einem der Ansprüche 2 bis 17 auszuführen.

21. Apparat zum Durchführen des Verfahrens nach einem der Ansprüche 1-17, wobei der Apparat Folgendes beinhaltet:
Mittel, die dazu ausgelegt sind, ein digitales Modell des Zahns des Patienten zu erstellen; Mittel, die dazu ausgelegt sind, ein virtuelles Objekt zu einem vorbestimmten Ort auf dem digitalen Zahnmodell hinzuzufügen; Skalieren des digitalen Zahnmodells; und
Mittel, die dazu ausgelegt sind, das ursprüngliche digitale Zahnmodell mit dem skalierten digitalen Zahnmodell zu überlagern, um die Herstellung einer Dentalschablone auf der Grundlage des skalierten digitalen Zahnmodells und des ursprünglichen digitalen Zahnmodells zu ermöglichen, um ein genanntes Objekt auf dem Zahn des Patienten zu lokalisieren.

## Revendications

1. Procédé de fabrication d'un gabarit dentaire pour le positionnement d'un objet sur la dent d'un patient, comprenant :
la création d'un modèle de dent numérique de la dent du patient ;
l'ajout d'un objet virtuel au niveau d'un emplacement prédéterminé sur le modèle de dent numérique ;
la mise à l'échelle du modèle de dent numérique ;
la superposition du modèle de dent numérique mis à l'échelle sur le modèle de dent numérique original ; et
la fabrication du gabarit dentaire basé sur le modèle de dent numérique mis à l'échelle et le modèle de dent numérique original pour situer un dit objet sur la dent du patient.

2. Procédé selon la revendication 1, dans lequel un objet virtuel est placé sur le modèle de dent numérique mis à l'échelle superposé.

3. Procédé selon la revendication 1, dans lequel l'objet virtuel est placé au niveau d'un emplacement et selon une orientation prédéterminés dans le modèle de dent numérique mis à l'échelle superposé.

4. Procédé selon la revendication 1, 2 ou 3, le procédé comprenant en outre l'élimination du modèle de dent numérique du modèle de dent numérique mis à l'échelle pour former un applicatif virtuel.

5. Procédé selon l'une quelconque des revendications précédentes, le procédé comprenant en outre l'élimination des structures numérisées au niveau, au-dessous ou le long de la limite gingivale.

6. Procédé selon l'une quelconque des revendications précédentes, comprenant en outre l'élimination de la structure numérisée en contact proximal avec une dent adjacente.

7. Procédé selon l'une quelconque des revendications précédentes, dans lequel la fabrication comprend le rendu d'un gabarit dentaire physique en utilisant un procédé de prototypage rapide.

8. Procédé selon la revendication 1, dans lequel :
la création du modèle de dent numérique comprend la numérisation de la dent du patient ;
l'objet virtuel est ajouté comme une représentation visuelle de l'objet à l'emplacement prédéterminé sur la dent numérisée ; et
le gabarit dentaire situe l'objet sur la dent du patient.

9. Procédé selon l'une quelconque des revendications précédentes, dans lequel des objets virtuels sont ajoutés à des emplacements prédéterminés sur une pluralité des modèles de dent numériques, et la fabrication du gabarit dentaire produit un gabarit de collage orthodontique comprenant une coque ayant une pluralité de cavités façonnée pour être insérée sur les dents du patient pour situer les objets sur les dents du patient.

10. Procédé selon l'une quelconque des revendications 1 à 8, dans lequel la fabrication produit un gabarit de collage orthodontique comprenant une coque ayant une pluralité de cavités façonnée pour être insérée sur la dent d'un patient, la coque ayant une ouverture au niveau de l'emplacement prédéterminé pour recevoir comme un dit objet un dispositif orthodontique.

11. Procédé selon la revendication 10, dans lequel l'ouverture comprend une fenêtre pour permettre qu'un agent collant soit appliqué à une zone prédéterminée sur la dent.

12. Procédé selon la revendication 9, 10 ou 11, dans lequel la coque est polymérique.

13. Procédé selon l'une quelconque des revendications 9 à 12, dans lequel la fabrication produit une coque comprenant un bord aux lignes courbées sur l'ouverture pour fixer le dispositif orthodontique à la coque.

14. Procédé selon l'une quelconque des revendications 9 à 13, dans lequel le dispositif orthodontique est un boîtier orthodontique.

15. Procédé selon l'une quelconque des revendications 9 à 14, dans lequel la fabrication est un processus de fabrication direct.

16. Procédé selon l'une quelconque des revendications 9 à 15, dans lequel la coque est capable d'articulation avec une pluralité de cavités à liaison souple.

17. Procédé selon l'une quelconque des revendications 9 à 15, dans lequel la fabrication produit la coque comme une unité non articulée.

18. Produit de programme d'ordinateur pour réaliser le procédé selon l'une quelconque des revendications 1 à 17, le produit de programme d'ordinateur comprenant des instructions de programme pour amener un ordinateur à :
créer un modèle numérique de la dent d'un patient ; ajouter un objet virtuel au niveau d'un emplacement prédéterminé sur le modèle de dent numérique ; mettre à l'échelle le modèle de dent numérique ; et superposer le modèle de dent numérique mis à l'échelle sur le modèle de dent numérique original pour permettre la fabrication d'un gabarit dentaire basé sur le modèle de dent numérique mis à l'échelle et le modèle de dent numérique original pour situer un dit objet sur la position de la dent du patient.

19. Produit de programme d'ordinateur selon la revendication 18, comprenant en outre des instructions de programme pour amener un ordinateur à provoquer la fabrication du gabarit dentaire.

20. Produit de programme d'ordinateur selon la revendication 19, dans lequel les instructions de programme amène un ordinateur à effectuer un procédé selon l'une quelconque des revendications 2 à 17.

21. Appareil pour réaliser le procédé selon l'une quelconque des revendications 1 à 17, l'appareil comprenant : un moyen configuré pour créer un modèle numérique de la dent du patient ; un moyen configuré pour ajouter un objet virtuel à un emplacement prédéterminé sur le modèle de dent numérique ; mettre à l'échelle le modèle de dent numérique ; et un moyen configuré pour superposer le modèle de dent numérique mis à l'échelle sur le modèle de dent numérique original pour permettre la fabrication d'un gabarit dentaire basé sur le modèle de dent numérique mis à l'échelle et le modèle de dent numérique original pour situer un dit objet sur la dent du patient.
